(19) **Europäisches Patentamt / European Patent Office / Office européen des brevets**

(11) **EP 4 525 472 A1**

(12) **EUROPEAN PATENT APPLICATION**
published in accordance with Art. 153(4) EPC

(43) Date of publication:
**19.03.2025 Bulletin 2025/12**

(21) Application number: **23856442.1**

(22) Date of filing: **04.08.2023**

(51) International Patent Classification (IPC):
**H04N 23/57** (2023.01)

(52) Cooperative Patent Classification (CPC):
**H04N 23/55; G02B 13/0065; G03B 17/17;
G03B 30/00; H04N 23/51; H04N 23/57**

(86) International application number:
**PCT/CN2023/111306**

(87) International publication number:
**WO 2024/041352 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 CN 202211013150**

(71) Applicant: **Huawei Technologies Co., Ltd.
Shenzhen, Guangdong 518129 (CN)**

(72) Inventors:
• **ZHENG, Hong
  Shenzhen, Guangdong 518129 (CN)**
• **DENG, Zaibing
  Shenzhen, Guangdong 518129 (CN)**

(74) Representative: **Grünecker Patent- und
Rechtsanwälte
PartG mbB
Leopoldstraße 4
80802 München (DE)**

(54) **CAMERA AND ELECTRONIC DEVICE**

(57) Embodiments of this application provide a camera and an electronic device, to resolve a technical problem of obtaining a large amount of light admitted and implementing lens miniaturization. The camera includes a first refraction element and a reflection element, and can fold an optical path. A light exit surface of the first refraction element is bonded to a light entrance surface of the reflection element through a bonding layer, so that a distance between the first refraction element and the reflection element can be shortened, structural compactness of the camera can be enhanced, and lens miniaturization can be implemented. In addition, at least one boundary of an orthographic projection of the reflection element on a first plane is located within a boundary of an orthographic projection of the first refraction element on the first plane. The first refraction element includes a part that overlaps the projection of the reflection element on the first plane and another part other than the overlapping part. Incident light from the another part of the first refraction element other than the overlapping part can also be transmitted to a reflective surface of the reflection element, so that more light rays are converged on the reflection element, and an amount of light admitted by the camera is increased.

FIG. 2

## Description

This application claims priority to Chinese Patent Application No. 202211013150.7, filed with the China National Intellectual Property Administration on August 23, 2022 and entitled "CAMERA AND ELECTRONIC DEVICE", which is incorporated herein by reference in its entirety.

## TECHNICAL FIELD

This application relates to the field of terminal devices, and in particular, to a camera and an electronic device.

## BACKGROUND

Electronic devices, such as mobile phones, may implement a photographing function by disposing a camera module. The camera module can implement conversion of an optical path by configuring a periscope camera, so that the camera can be horizontally placed, to obtain a larger zoom ratio and assist the mobile phone in shooting a longer-ranged and clearer photo. In addition, a thickness of the camera module can be reduced, and a light and thin design of the mobile phone can be implemented.

However, the conversion of the optical path may cause light energy losses, and consequently an amount of light admitted by a lens is reduced, and imaging definition is affected. Therefore, how to obtain a large amount of light admitted and implement lens miniaturization becomes an urgent problem to be resolved.

## SUMMARY

Embodiments of this application provide a camera and an electronic device, to resolve a technical problem of obtaining a large amount of light admitted and implementing lens miniaturization.

To achieve the foregoing objectives, the following technical solutions are used in embodiments of this application.

According to a first aspect, a camera is provided. The camera includes a first refraction element, a reflection element, a bonding layer, and a photosensitive element. The first refraction element is disposed on a light entrance side of the camera. The reflection element is disposed on a light exit side of the first refraction element. A light exit surface of the first refraction element is bonded to a light entrance surface of the reflection element through the bonding layer, at least one boundary of an orthographic projection of the reflection element on a first plane is located within a boundary of an orthographic projection of the first refraction element on the first plane, a refracted light beam emitted from an edge of the light exit surface of the first refraction element is capable of being transmitted to the reflection element, and the first plane is a plane parallel to the light exit surface of the first refraction element. The photosensitive element is disposed on a light exit side of the reflection element and is configured to receive a reflected light beam from the reflection element.

Based on the foregoing description of a structure of the camera provided in embodiments of this application, it can be learned that the camera includes the first refraction element and the reflection element, and can change an optical path of incident light. The light exit surface of the first refraction element is bonded to the light entrance surface of the reflection element through the bonding layer, so that a distance between the first refraction element and the reflection element can be shortened and structural compactness of the camera can be enhanced, and in addition, compared with implementing fastening of the first refraction element and the reflection element through a mechanical component, space for disposing the mechanical component can be saved, and therefore, lens miniaturization is implemented. In addition, the at least one boundary of the orthographic projection of the reflection element on the first plane is located within the boundary of the orthographic projection of the first refraction element on the first plane. That is, a part of the first refraction element extends outside the reflection element. In this way, in a case in which a size of the reflection element remains unchanged, the first refraction element with a larger volume can receive more incident light. The first refraction element includes a part that overlaps the projection of the reflection element on the first plane and another part other than the overlapping part. Incident light from the another part of the first refraction element other than the overlapping part can also be transmitted to a reflective surface of the reflection element, so that more light rays are converged on the reflection element, and an amount of light admitted by the camera is increased. In conclusion, the camera provided in embodiments of this application can obtain a large amount of light admitted and implement lens miniaturization.

In a feasible implementation of the first aspect, at least one group of opposite edges of the light exit surface of the first refraction element is located outside a boundary of the light entrance surface of the reflection element.

In this way, refracted light emitted from the light exit surface of the first refraction element is further increased, and the increased refracted light can be transmitted to the reflective surface of the reflection element. Therefore, an amount of light admitted by the camera is increased, and a lens can be used in more usage scenarios.

In a feasible implementation of the first aspect, the first refraction element is a plano-convex lens, the reflection element is a dispersive prism, and an included angle between an incident light beam from the first refraction element and the reflected light beam from the reflection element is 90°.

In a feasible implementation of the first aspect, a first chamfer is disposed on at least a part of the edge of the light exit surface of the first refraction element, and the first chamfer and the reflection element form adhesive storage space for accommodating the bonding layer.

The adhesive storage space is disposed to provide space for an overflowing bonding layer, so that a position of the bonding layer is controlled, and passing of a light ray through the first refraction element and the reflection element is not affected. A problem that a flow position of the overflowing bonding layer is uncontrollable is resolved, and a step of cleaning the adhesive can be avoided. This reduces a process flow, effectively improves production efficiency, and helps batch production.

In a feasible implementation of the first aspect, a second chamfer is disposed on at least a part of an edge of the light entrance surface of the reflection element, and the second chamfer and the first refraction element form adhesive storage space for accommodating the bonding layer.

In a feasible implementation of the first aspect, the camera further includes a second refraction element. The second refraction element is disposed between the reflection element and the photosensitive element, and is configured to: receive the reflected light beam from the reflection element, refract the reflected light beam, and then transmit the refracted light beam to the photosensitive element.

The second refraction element is disposed to enable the photosensitive element to obtain more light rays and meet a special optical requirement.

In a feasible implementation of the first aspect, the camera further includes a first plating layer. The first plating layer is disposed between the bonding layer and the light exit surface of the first refraction element, and is configured to block reflected light from a surface that is of the bonding layer and that is in contact with the first plating layer.

The first plating layer is disposed to ensure light transmittance of the bonding layer, ensure an amount of light admitted by the reflective surface of the reflection element, and further ensure the amount of light admitted by the lens.

In a feasible implementation of the first aspect, the camera further includes a second plating layer. The second plating layer is disposed between the bonding layer and the light entrance surface of the reflection element, and is configured to block reflected light from a surface that is of the bonding layer and that is in contact with the second plating layer.

The second plating layer is disposed to ensure the light transmittance of the bonding layer, ensure the amount of light admitted by the reflective surface of the reflection element, and further ensure the amount of light admitted by the lens.

In a feasible implementation of the first aspect, the camera further includes a light-shielding layer. The light-shielding layer is disposed on an edge of bonding between the bonding layer and the light exit surface of the first refraction element, and the light-shielding layer is disposed on an edge of bonding between the bonding layer and the light entrance surface of the reflection element.

The light-shielding layer is disposed, so that stray light effect of a gluing position after the first refraction element and the reflection element are glued through the bonding layer is improved.

In a feasible implementation of the first aspect, a bevel is disposed on a corner of the first refraction element in a direction of an optical axis.

The bevel is disposed to ensure that the whole first refraction element is an effective optical zone. In this way, a non-effective optical zone of the first refraction element is cut off, which helps implement lens miniaturization.

According to a second aspect, an electronic device is provided, including a housing and a camera module. The camera module is disposed in the housing. The camera module includes a camera, and the camera includes: a first refraction element, disposed on a light entrance side of the camera; a reflection element, disposed on a light exit side of the first refraction element; a bonding layer, where a light exit surface of the first refraction element is bonded to a light entrance surface of the reflection element through the bonding layer, at least one boundary of an orthographic projection of the reflection element on a first plane is located within a boundary of an orthographic projection of the first refraction element on the first plane, a refracted light beam emitted from an edge of the light exit surface of the first refraction element is capable of being transmitted to the reflection element, and the first plane is a plane parallel to the light exit surface of the first refraction element; and a photosensitive element, disposed on a light exit side of the reflection element and configured to receive a reflected light beam from the reflection element. A light entrance hole is provided on the housing, and the first refraction element is disposed in correspondence with the light entrance hole, to allow a light beam to be transmitted to the first refraction element through the light entrance hole.

A miniaturized lens that can obtain a large amount of light admitted by the lens is disposed in the electronic device, so that structure size of the electronic device can be smaller and the electronic device can obtain a photographed image with higher quality. In addition, a lens that can change an optical path is disposed, so that a long-focus function of a handheld electronic device can be implemented.

In a feasible implementation of the second aspect, at least one group of opposite edges of the light exit surface of the first refraction element is located outside a boundary of the light entrance surface of the reflection element.

In this way, refracted light emitted from the light exit surface of the first refraction element is further increased, and the increased refracted light can be transmitted to the reflective surface of the reflection element. Therefore, an amount of light admitted by the camera is increased, and the electronic device can obtain the photographed image with higher quality.

In a feasible implementation of the second aspect, the first refraction element is a plano-convex lens, the reflection element is a dispersive prism, and an included angle between an incident light beam from the first refraction element and the reflected light beam from the reflection element is 90°.

In a feasible implementation of the second aspect, a first chamfer is disposed on at least a part of the edge of the light exit surface of the first refraction element, and the first chamfer and the reflection element form adhesive storage space for accommodating the bonding layer.

In a feasible implementation of the second aspect, a second chamfer is disposed on at least a part of an edge of the light entrance surface of the reflection element, and the second chamfer and the first refraction element form adhesive storage space for accommodating the bonding layer.

In a feasible implementation of the second aspect, the camera further includes a second refraction element. The second refraction element is disposed between the reflection element and the photosensitive element, and is configured to: receive the reflected light beam from the reflection element, refract the reflected light beam, and then transmit the refracted light beam to the photosensitive element.

In a feasible implementation of the second aspect, the camera further includes a first plating layer. The first plating layer is disposed between the bonding layer and the light exit surface of the first refraction element, and is configured to block reflected light from a surface that is of the bonding layer and that is in contact with the first plating layer.

In a feasible implementation of the second aspect, the camera further includes a second plating layer. The second plating layer is disposed between the bonding layer and the light entrance surface of the reflection element, and is configured to block reflected light from a surface that is of the bonding layer and that is in contact with the second plating layer.

In a feasible implementation of the second aspect, the camera further includes a light-shielding layer. The light-shielding layer is disposed on an edge of bonding between the bonding layer and the light exit surface of the first refraction element, and the light-shielding layer is disposed on an edge of bonding between the bonding layer and the light entrance surface of the reflection element.

In a feasible implementation of the second aspect, a bevel is disposed on a corner of the first refraction element in a direction of an optical axis.

## BRIEF DESCRIPTION OF DRAWINGS

FIG. 1 is a diagram of a split structure of an electronic device according to an embodiment of this application;
FIG. 2 is a diagram of a structure of a camera according to an embodiment of this application;
FIG. 3 is a diagram of an optical path of the camera shown in FIG. 2;
FIG. 4a is a diagram of projections of a first refraction element and a transmitting element on a first plane in a camera according to an embodiment of this application;
FIG. 4b is a diagram of a structure of the first refraction element in the camera shown in FIG. 4a;
FIG. 5 is a diagram of structures of a first refraction element and a transmitting element in a camera according to an embodiment of this application;
FIG. 6 is a diagram of other projections of a first refraction element and a transmitting element on a first plane in a camera according to an embodiment of this application;
FIG. 7 is a diagram of a structure of another camera according to an embodiment of this application;
FIG. 8 is a diagram of simulation effect of reflectivity of a camera in which a bonding layer made of a first material is used according to an embodiment of this application;
FIG. 9 is a diagram of simulation effect of reflectivity of another camera in which a bonding layer made of a second material is used according to an embodiment of this application;
FIG. 10 is a diagram of a measured result of a membrane design according to an embodiment of this application;
FIG. 11 is a diagram of a structure of still another camera according to an embodiment of this application;
FIG. 12 is a diagram of a structure of yet another camera according to an embodiment of this application;
FIG. 13 is a diagram of a structure of another camera according to an embodiment of this application;
FIG. 14 is a diagram of a structure of another camera according to an embodiment of this application; and
FIG. 15 is a diagram of a structure of another camera according to an embodiment of this application.

Reference numerals:

100: mobile phone; 110: screen; 120: housing; 121: rear cover; 121a: light entrance hole; 122: bezel; 123: middle frame; 130: camera module; 131: camera; 140: mainboard; 150: camera decoration cover; 151: transparent window; 1: first refraction element; 11: light entrance surface; 12: light exit surface; 13: first end; 13a: edge; 14: second end; 15: bevel; 2: reflection element; 21: light entrance surface; 22: reflective surface; 23: light exit surface; 3: photosensitive element; 4: bonding layer; 41: first surface; 42: second surface; 5: second refraction element; 6: first plating layer; 7: second plating layer; 8: adhesive storage space; 9: light-shielding layer; 101a: first part; 101b: second part; 101c: third part.

## DESCRIPTION OF EMBODIMENTS

The following describes the technical solutions in embodiments of this application with reference to accompanying drawings in embodiments of this application. In descriptions of this application, "/" represents an "or" relationship between associated objects unless otherwise specified. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

An embodiment of this application provides an electronic device. The electronic device is a type of electronic device with a photographing function. Specifically, the electronic device may include a mobile phone (mobile phone), a tablet computer (pad), an intelligent wearable product (for example, a smartwatch or a smart band), a virtual reality (virtual reality, VR) device, an augmented reality (augmented reality, AR) device, or a device such as a household appliance. A specific form of the electronic device is not specifically limited in embodiments of this application.

The following uses a mobile phone as an example to describe in detail the electronic device provided in embodiments of this application.

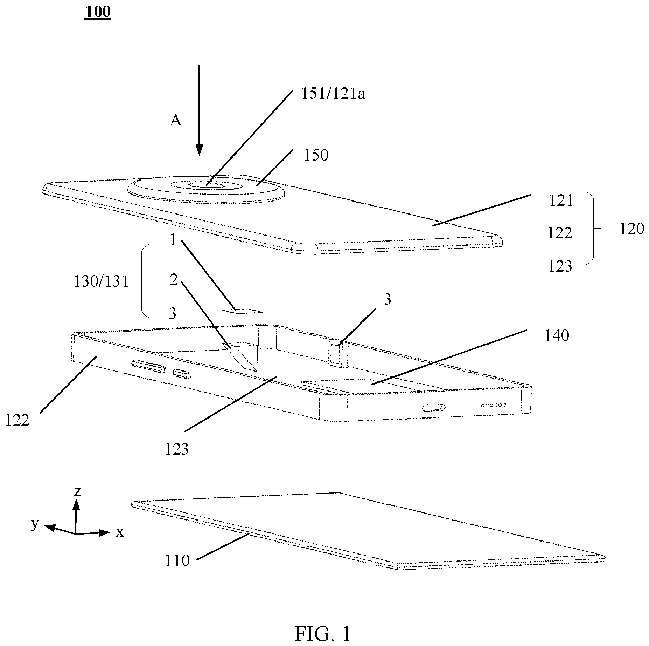

FIG. 1 is a diagram of a split structure of an electronic device according to an embodiment of this application. As shown in FIG. 1, a mobile phone 100 includes a screen 110, a housing 120, and a camera module 130.

It may be understood that FIG. 1 shows only an example of some components included in the mobile phone 100. Actual shapes, actual sizes, actual locations, and actual structures of these components are not limited to those in FIG. 1. In some other examples, the mobile phone 100 may not include the screen 110.

The screen 110 is configured to display an image, a video, and the like. The screen 110 may include a flexible display, or may include a rigid display. For example, the screen 110 may be an organic light-emitting diode (organic light-emitting diode, OLED) display, an active-matrix organic light-emitting diode (active-matrix organic light-emitting diode, AMOLED) display, a mini light-emitting diode (mini light-emitting diode) display, a micro light-emitting diode (micro light-emitting diode) display, a micro organic light-emitting diode (micro organic light-emitting diode) display, a quantum dot light-emitting diode (quantum dot light-emitting diode, QLED) display, or a liquid crystal display (liquid crystal display, LCD).

The housing 120 is configured to protect a component disposed inside the mobile phone 100, for example, the camera module 130. The housing 120 includes a rear cover 121 and a bezel 122. The bezel 122 is located between the rear cover 121 and the screen 110. The bezel 122 may be fastened to the rear cover 121 by using an adhesive. Alternatively, the bezel 122 and the rear cover 121 may be of an integrated structure. In other words, the bezel 122 and the rear cover 121 are of an overall structure. The screen 110, the rear cover 121, and the bezel 122 enclose internal accommodation space of the mobile phone 100. The internal accommodation space accommodates the camera module 130.

For ease of the following description, a stacking direction of the screen 110, the rear cover 121, and the bezel 122 in the mobile phone 100 is defined as a z-axis direction. A plane parallel to the rear cover 121 is an xy plane. A short side of the rear cover 121 is in an x direction, and a long side of the rear cover 121 is in a y direction.

The camera module 130 is configured to take a photo/record a video. The camera module 130 may integrate a plurality of cameras, for example, may include a periscope camera. The camera module 130 may be fastened to a surface that is of the bezel 122 and that is close to the rear cover 121 through a thread connection, clamping, welding, or the like. In another embodiment, with reference to FIG. 1, the mobile phone 100 further includes a middle frame 123. The middle frame 123 is fastened to a periphery of an inner surface of the bezel 122. For example, the middle frame 123 may be fastened to the bezel 122 through welding. The middle frame 123 and the bezel 122 may alternatively be of an integrated structure. The middle frame 123 is used as a structural "framework" of the mobile phone 100. The camera module 130 may be fastened to the middle frame 123 through a thread connection, clamping, welding, or the like.

The camera module 130 may be used as a rear-facing camera module, or may be used as a front-facing camera module. For example, with reference to FIG. 1, the camera module 130 is fastened to a surface that is of the middle frame 123 and that is close to the rear cover 121, and a light entrance surface of the camera module 130 faces the rear cover 121.

A light entrance hole 121a is provided on the rear cover 121, and the light entrance hole 121a allows an object light ray to be transmitted to the light entrance surface of the camera module 130. To ensure a beautiful appearance of the mobile phone 100 and a waterproof level of the device, in some embodiments, the mobile phone 100 further includes a camera decoration cover 150, a mounting hole is provided on the rear cover 121, and the camera decoration cover 150 covers and is fastened to the mounting hole. In some embodiments, the camera decoration cover 150 protrudes to a side that is of the rear cover 121 and that is away from the screen 110. In this way, the camera decoration cover 150 can increase mounting space of the camera module 130 in the mobile phone 100 in the Z-axis direction. A transparent window 151 is provided on the camera decoration cover 150. The transparent window 151 allows the object light ray to be transmitted to the light entrance surface of the camera module 130.

A mainboard 140 is electrically connected to the camera module 130, and is configured to control the camera module 130, to implement adjustment of an amount of light admitted by the camera module 130 and the like, for example, to invoke the periscope camera in the camera module 130 to work. The mainboard 140 is fastened in an internal accommodation cavity of the mobile phone 100. For example, the mainboard 140 may be fastened to the middle frame 123 through a thread connection, clamping, or the like.

To enable the camera module 130 to implement a long-focus function, obtain a larger zoom ratio, and assist the mobile phone 100 in shooting a longer-ranged and clearer photo, a camera is provided in an embodiment of this application. The camera is integrated into the camera module 130, and may be used as a periscope camera. An object light ray is transmitted to the camera, so that an optical path can be folded.

The following describes in detail the camera provided in embodiments of this application with reference to the accompanying drawings.

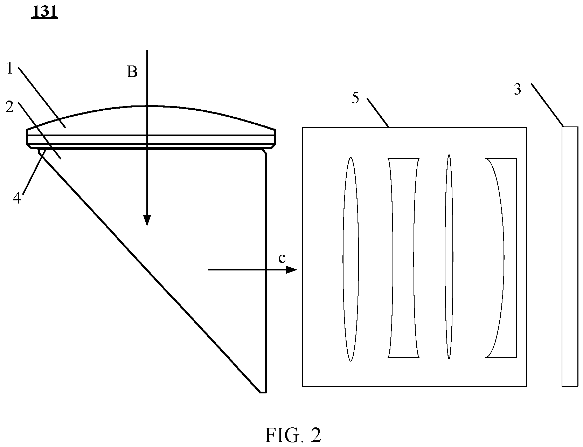

FIG. 2 is a diagram of a structure of a camera according to an embodiment of this application. As shown in FIG. 2, a camera 131 includes a first refraction element 1, a reflection element 2, a bonding layer 4, and a photosensitive element 3.

With reference to FIG. 1 and FIG. 2, the camera 131 is disposed in correspondence with the light entrance hole 121a (or the transparent window 151 on the camera decoration cover 150), so that a light beam is transmitted to the first refraction element 1 through the light entrance hole 121a (or the transparent window 151 on the camera decoration cover 150).

The first refraction element 1 may be, for example, a plano-convex lens shown in FIG. 2, or may be a convex aspheric lens, and is configured to converge light rays. Refer to FIG. 1. The first refraction element 1 is disposed on a light entrance side A of the camera. There are a plurality of materials that may be selected for the first refraction element 1, for example, glass. A model of the glass may be H-ZLaF3, H-ZLaF50E, or H-LaF10LA. The material of the first refraction element 1 is not limited in this application.

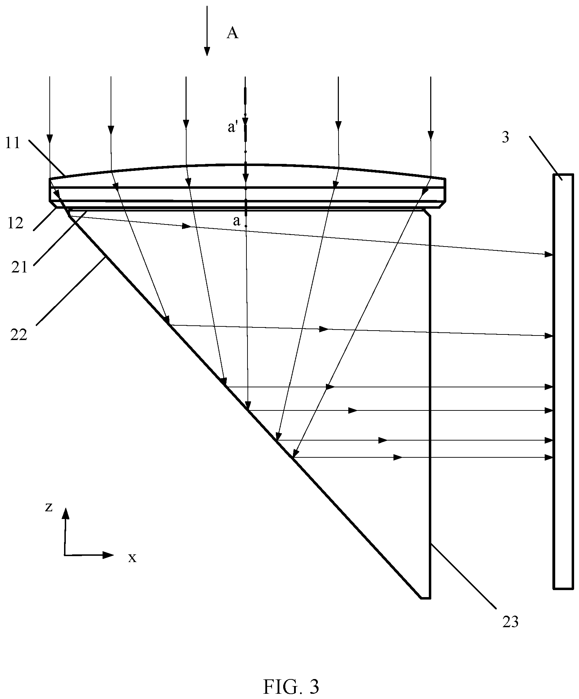

FIG. 3 is a diagram of an optical path of the camera shown in FIG. 2. As shown in FIG. 3, a light ray from the light entrance side A can be transmitted to a light entrance surface 11 of the first refraction element 1, and after being refracted, refracted light is emitted from a light exit surface 12 of the first refraction element 1. The refracted light beam emitted from the light exit surface 12 of the first refraction element 1 can be transmitted to a reflective surface 22 of the reflection element 2. For example, when the first refraction element 1 is the plano-convex lens, the light entrance surface 11 of the plano-convex lens is a curved surface, the light exit surface 12 of the plano-convex lens is a plane, and the plano-convex lens is a structure with a thin outer side and a thick inner side. In this case, all light rays transmitted to the light entrance surface 11 of the plano-convex lens may be converged toward a direction close to an optical axis a-a' of the plano-convex lens. In this way, the first refraction element 1 can converge more light rays on the reflective surface 22 of the reflection element 2.

Still refer to FIG. 2 and FIG. 3.

The reflection element 2 may be, for example, a prism shown in FIG. 2, or may be a 45-degree reflection mirror, and is configured to fold an optical path. There are a plurality of materials that may be selected for the reflection element 2, for example, glass. A model of the glass may be H-ZLaF3, H-ZLaF50E, or H-LaF10LA. The material of the reflection element 2 is not limited in this application.

The reflection element 2 is disposed on a light exit side of the first refraction element 1. As shown in FIG. 2, the reflection element 2 has a light entrance surface 21, the reflective surface 22, and a light exit surface 23. The refracted light from the first refraction element 1 is transmitted to the reflective surface 22 of the reflection element 2 through the light entrance surface 21 of the reflection element 2. The light ray can be reflected on the reflective surface 22 and then emitted from the light exit surface 23 of the reflection element 2.

In this way, the first refraction element 1 and the reflection element 2 cooperate to fold the light ray from a first optical path B to a second optical path C that forms an included angle with the first optical path B. For example, when the reflection element 2 is a prism, a light ray transmitted to the prism can be totally reflected on the reflective surface 22, and the included angle formed between the first optical path B and the second optical path C may be 90°.

To enable a lens to have good optical performance and further enhance compactness of the lens, a material whose refractive index is greater than 1.7 is selected for the first refraction element 1 and the reflection element 2. The refractive index is generally a wavelength function, and a wavelength range required by imaging optics is from 400 nm to 700 nm.

The bonding layer 4 is configured to bond the light exit surface 12 of the first refraction element 1 and the light entrance surface 21 of the reflection element 2 together. In this way, the bonding layer 4 rather than air is between the light exit surface 12 of the first refraction element 1 and the light entrance surface 21 of the reflection element 2, so that image quality of an optical system can be improved, light energy loss can be reduced, and imaging definition is improved. There are a plurality of materials that may be used for the bonding layer 4, for example, ultraviolet rays (ultraviolet rays, UV) adhesive. Bonding layers made of different materials have different refractive indexes. To meet a requirement for an amount of light admitted by the lens, a range of the refractive index of the bonding layer in embodiments of this application may be from 1.5 to 1.62.

In the foregoing description, the first refraction element 1 and the reflection element 2 are bonded together through the bonding layer 4. In this way, there is no need to dispose, outside the first refraction element 1 and the reflection element 2, a mechanical component configured to connect the first refraction element 1 and the reflection element 2, so that less space of the lens is used. In addition, a distance between the first refraction element 1 and the reflection element 2 in the direction of the optical axis a-a' is reduced. This helps a miniaturization design of the lens. In addition, the bonding manner helps improve a production capacity per hour and batch production. Therefore, costs are reduced.

The photosensitive element 3 is disposed on a light exit side of the reflection element 2, and is configured to receive a reflected light beam from the reflection element 2. When space occupied by the first refraction element 1 and the reflection element 2 is miniaturized, there is larger disposition space for the photosensitive element 3. This helps improve quality of a photographed image of an electronic device.

In this way, the camera has a function of folding of an optical path, and can further meet a requirement for the miniaturization design.

Still refer to FIG. 2. To enable the photosensitive element 3 to obtain more light rays and meet a special optical requirement, in some embodiments, the camera 131 further includes a second refraction element 5. The second refraction element 5 is disposed between the reflection element 2 and the photosensitive element 3, is opposite to the light exit surface 23 of the reflection element 2, and is configured to: receive the reflected light beam from the reflection element 2, refract the reflected light beam, and then transmit the refracted light beam to the photosensitive element 3. The second refraction element 5 may be a lens group shown in FIG. 2. The lens group may include a convex lens, a concave lens, and the like. Optical axes of each optical lens in the lens group may be located on a same optical axis.

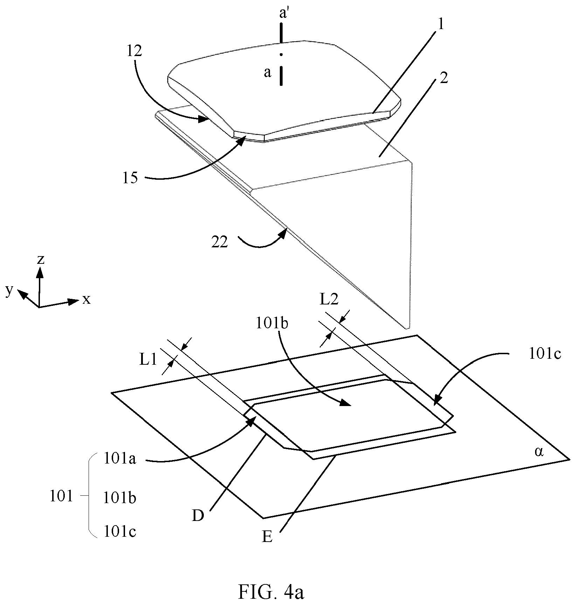

To increase the amount of light admitted by the lens, in the lens provided in embodiments of this application, as shown in FIG. 4a, at least one boundary of an orthographic projection E of the reflection element 2 on a first plane α is located within a boundary of an orthographic projection D of the first refraction element 1 on the first plane α. The first plane α is a plane parallel to the light exit surface 12 of the first refraction element 1. In this way, a light entrance area of the first refraction element 1 is increased, so that the first refraction element 1 can converge more light rays on the reflective surface 22 of the reflection element 2. The following provides a description with reference to the accompanying drawings.

With reference to FIG. 3 and FIG. 4a, in some embodiments, two sides of the first refraction element 1 in an x direction both extend to the outside of the reflection element 2. As shown in FIG. 4a, the orthographic projection D of the first refraction element 1 on the first plane α includes a first part 101a, a second part 101b, and a third part 101b. The first part 101a and the third part 101b are located outside the orthographic projection E of the reflection element 2 on the first plane α. In other words, the two sides of the first refraction element 1 in the x direction both extend to the outside of the reflection element 2. The second part 101b coincides with the orthographic projection E of the reflection element 2 on the first plane α. In an implementation, at least one group of opposite edges of the light exit surface 12 of the first refraction element 1 is located outside a boundary of the light entrance surface 21 of the reflection element 2. In this way, refracted light emitted from the light exit surface 12 of the first refraction element 1 is further increased, and the increased refracted light can be transmitted to the reflective surface 22 of the reflection element 2. Therefore, an amount of light admitted by the camera is increased.

As shown in FIG. 3, incident light transmitted to an edge of the light entrance surface 11 of the first refraction element 1 in the x direction can be transmitted to the reflective surface 22 of the reflection element 2. Therefore, under a condition in which a size of the reflection element 2 remains unchanged, the first refraction element 1 shown in FIG. 3 can converge more light rays on the reflective surface 22 of the reflection element 2. In other words, an amount of light admitted by and transmitted to the reflective surface 22 of the reflection element 2 through a structure that is of the first refraction element 1 and that corresponds to an orthographic projection of the second part 101b is unchanged, and an amount of light admitted by and transmitted to the reflective surface 22 of the reflection element 2 through structures that are of the first refraction element 1 and that respectively correspond to orthographic projections of the first part 101a and the third part 101b is additionally increased. Therefore, more light rays are converged on the reflection element 2, and the amount of light admitted by the camera 131 is increased. As shown in FIG. 4a, a width of a part that is of the first refraction element 1 extending to the outside of the reflection element 2 and that is in the x direction is a first width L1. When L1 = 0.1 mm, the amount of light admitted may be increased by 5%.

The incident light transmitted to the edge of the light entrance surface 11 of the first refraction element 1 in the x direction can be transmitted to the reflective surface 22 of the reflection element 2, so that it can be ensured that the whole part of the first refraction element 1 extending to the outside of the reflection element 2 is an effective optical zone (that is, all incident light from the light entrance surface 11 of the first refraction element 1 can be refracted to the reflective surface 22 of the reflection element 2), and miniaturization of the lens is ensured to a maximum extent.

As shown in FIG. 4a, widths of parts that are of the first refraction element 1 extending to the outside of the reflection element 2 and that are in the x direction are respectively the first width L1 and a second width L2. The first width L1 and the second width L2 may be equal. In this case, the parts of the first refraction element 1 extending to the outside of the reflection element 2 may be symmetric. Alternatively, the first width L1 and the second width L2 may be unequal. In this case, the parts of the first refraction element 1 extending to the outside of the reflection element 2 are asymmetric. Whether the parts of the first refraction element 1 extending to the outside of the reflection element 2 are symmetric is not limited in this application.

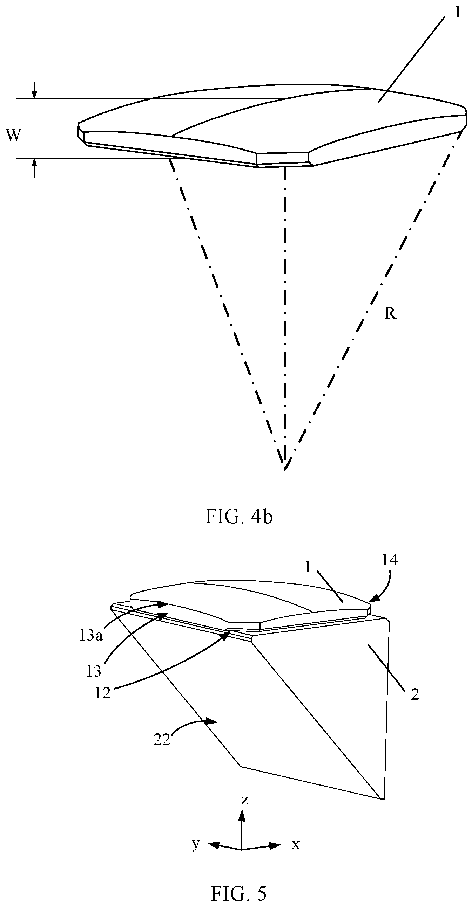

With reference to FIG. 4a and FIG. 4b, values of the first width L1 and the second width L2 are affected by a refractive index of the first refraction element 1, a curvature radius R of the light entrance surface 11 of the first refraction element 1, and a thickness W of the first refraction element 1. When the requirement for the amount of light admitted by the lens remains unchanged, a larger refractive index of the first refraction element 1 may indicate smaller values of the first width L1 and the second width L2. When the requirement for the amount of light admitted by the lens remains unchanged, a larger curvature radius R of the light entrance surface 11 of the first refraction element 1 may indicate smaller values of the first width L1 and the second width L2. When the requirement for the amount of light admitted by the lens remains unchanged, a larger thickness W of the first refraction element 1 may indicate smaller values of the first width L1 and the second width L2 However, to avoid stray light in the lens, the refractive index of the first refraction element 1 should not be excessively large, the curvature radius R of the light entrance surface 11 of the first refraction element 1 should not be excessively large, and the thickness W of the first refraction element 1 should not be excessively large. Therefore, lower limits of the values of the first width L1 and the second width L2 are affected. In addition, upper limits of the values of the first width L1 and the second width L2 are limited by an overall size of the lens.

In addition, to ensure that the whole first refraction element 1 is an effective optical zone, a bevel 15 is provided at a corner of the first refraction element 1 in the direction of the optical axis a-a'. In this way, a non-effective optical zone of the first refraction element 1 is cut off. As shown in FIG. 4a, the bevel 15 is provided at each of four corners of the first refraction element 1. Through the disposition of the bevel 15, a volume of the lens can be further reduced, and miniaturization is implemented.

In addition to meeting the requirement for the amount of light admitted, to enable the lens to be more miniaturized, as shown in FIG. 5, in some embodiments, the first refraction element 1 has a first end 13 that is in the x direction and that is close to the reflective surface 22 of the reflection element 2, and only the first end 13 of the first refraction element 1 extends to the outside of the reflection element 2. With reference to FIG. 3 and FIG. 5, incident light transmitted to an edge 13a of the first end 13 of the first refraction element 1 can be transmitted to the reflective surface 22 of the reflection element 2. In this way, only the first end 13 of the first refraction element 1 extends to the outside of the reflection element 2, so that more light rays can be converged on the reflection element 2, and the amount of light admitted by the camera 131 can be increased. In some other embodiments, the first refraction element 1 has a second end 14 that is in the x direction and that is away from the reflective surface 22 of the reflection element 2, and only the second end 14 of the first refraction element 1 extends to the outside of the reflection element 2, so that more light rays can also be converged on the reflection element 2, and the amount of light admitted by the camera 131 can be increased.

In addition to the two sides or one side of the first refraction element 1 in the x direction extending to the outside of the reflection element 2, two sides or one side of the first refraction element 1 in a y direction may also extend to the outside of the reflection element 2, to increase the amount of light admitted by the lens.

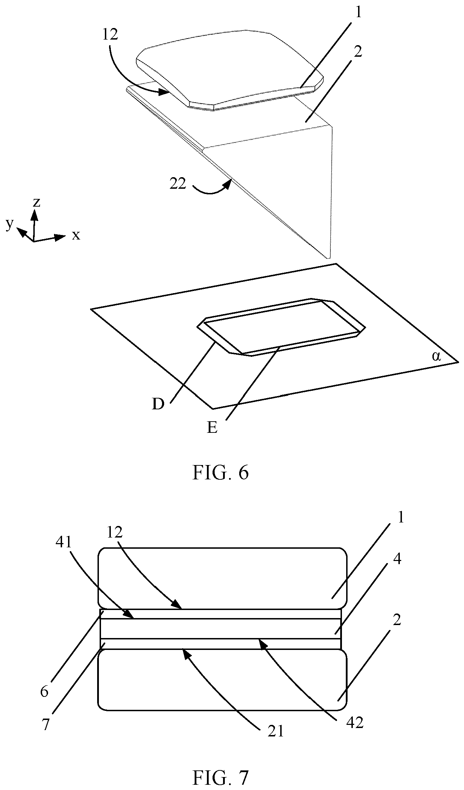

Under a condition in which the size of the reflection element 2 remains unchanged, to further increase the amount of light admitted by the lens, as shown in FIG. 6, the boundary of the orthographic projection D of the first refraction element 1 on the first plane $\alpha$ is located outside the boundary of the orthographic projection E of the reflection element 2 on the first plane $\alpha$. In this case, the two sides of the first refraction element 1 in the x direction and the two sides of the first refraction element 1 in the y direction both extend to the outside of the reflection element 2. In this way, a most amount of light rays can be converged on the reflection element 2, and the amount of light admitted by the camera 131 can be increased.

In addition, as shown in FIG. 4a, in some embodiments, a part of the boundary of the orthographic projection E of the reflection element 2 on the first plane α may be located outside the boundary of the orthographic projection D of the first refraction element 1 on the first plane α.

In the foregoing description, a proper implementation may be selected based on a disposition environment of the camera.

To ensure light transmittance of the bonding layer, to ensure the amount of light admitted by the reflective surface of the reflection element, and then to ensure the amount of light admitted by the lens, the lens provided in embodiments of this application further includes a plating layer configured to block reflected light from a surface of the bonding layer. The following provides a detailed description with reference to the accompanying drawings.

FIG. 7 is a diagram of a structure of another camera according to an embodiment of this application. As shown in FIG. 7, in some embodiments, the camera further includes a first plating layer 6. The first plating layer 6 is disposed between the bonding layer 4 and the light exit surface 12 of the first refraction element 1, and is configured to block reflected light from a first surface 41 that is of the bonding layer 4 and that is in contact with the first plating layer 6. For example, the first plating layer 6 may be disposed on the light exit surface 12 of the first refraction element 1.

Still refer to FIG. 7.

In some embodiments, the camera further includes a second plating layer 7. The second plating layer 7 is disposed between the bonding layer 4 and the light entrance surface 21 of the reflection element 2, and is configured to block reflected light from the second surface 42 that is of the bonding layer 4 and that is in contact with the second plating layer 7. For example, the second plating layer 7 may be disposed on the light entrance surface 21 of the reflection element 2.

In some embodiments, the camera may include both the first plating layer 6 and the second plating layer 7, to ensure the light transmittance of the bonding layer 4 to a maximum extent. Therefore, the amount of light admitted by the lens is ensured.

In the foregoing description, the first plating layer 6 and the second plating layer 7 may be both a laminated structure in which a material with a high folding index and a material with a low folding index are alternately laminated. For example, the material with the high folding index may be titanium dioxide, the material with the low folding index may be silicon dioxide. Selection of the material with the high folding index or the material with the low folding index is not limited in this application.

To meet a requirement for internal reflectivity $n_d$ of the first refraction element, the reflection element, and the bonding layer in the lens, for example, the internal reflectivity $n_d$ is less than 0.5%, in addition to limiting a material, a thickness, a shape, and a size of the bonding layer, a material and a thickness of the first plating layer and/or the second plating layer may be further limited.

In addition, to enable a same first plating layer and/or a same second plating layer to adapt to bonding layers made of different materials and meet the requirement for the internal reflectivity $n_d$ of the lens, for example, the internal reflectivity $n_d$ is less than 0.5%, an embodiment of this application further provides a design solution of the first plating layer and the second plating layer.

The following equivalent function of reflectivity is used.

$$f(n_x, n_y) = 1 - \frac{4n_1 n_x}{(n_1 + n_x)^2} \frac{4n_g n_x}{(n_g + n_x)^2} \frac{4n_g n_y}{(n_g + n_y)^2} \frac{4n_2 n_y}{(n_2 + n_y)^2}$$

$n_1$ indicates the refractive index of the first refraction element, $n_x$ indicates a refractive index of the first plating layer, $n_g$ indicates the refractive index of the bonding layer, $n_y$ indicates a refractive index of the second plating layer, and $n_2$ indicates a refractive index of the reflection element.

Based on the foregoing equivalent function of reflectivity, $n_1$ and $n_2$ are known constants: $n_g \in [1.5, 1.62]$. Under a condition of an optimal solution for multivariate equations that meets the requirement for the internal reflectivity of the lens, that is, $f(n_x, n_y) \leq 0.5\%$, optimal values of coatings $n_x$ and $n_y$ may be obtained according to the equivalent function of reflectivity.

Further, the internal reflectivity $n_d$ of the first refraction element, the reflection element, and the bonding layer in the lens may be used as a target design, and a laminated structure including the first refraction element, the first plating layer, the bonding layer, the second plating layer, and the reflection element is optimized, to obtain a detailed coating design.

The following provides models of laminated structures in which bonding layers made of different materials are used and a diagram of simulation effect of reflectivity thereof.

Table 1 is a model of a laminated structure corresponding to a bonding layer that is made of a first material and that is used by the lens according to an embodiment of this application.

**Table 1**

| Model of a laminated structure in which a bonding layer is made of a first material | | | |
|---|---|---|---|
| Material of a first refraction element | Glass (model: H-ZLAF3) | Thickness | 1 mm |
| Material of a first plating layer | For details, see Table 3. | | |
| Material of a bonding layer | Adhesive with a refractive index of 1.51 | Thickness | 0.01 mm |
| Material of a second plating layer | For details, see Table 3. | | |
| Material of a reflection element | Glass (model: H-ZLAF3) | Thickness | 5 mm |

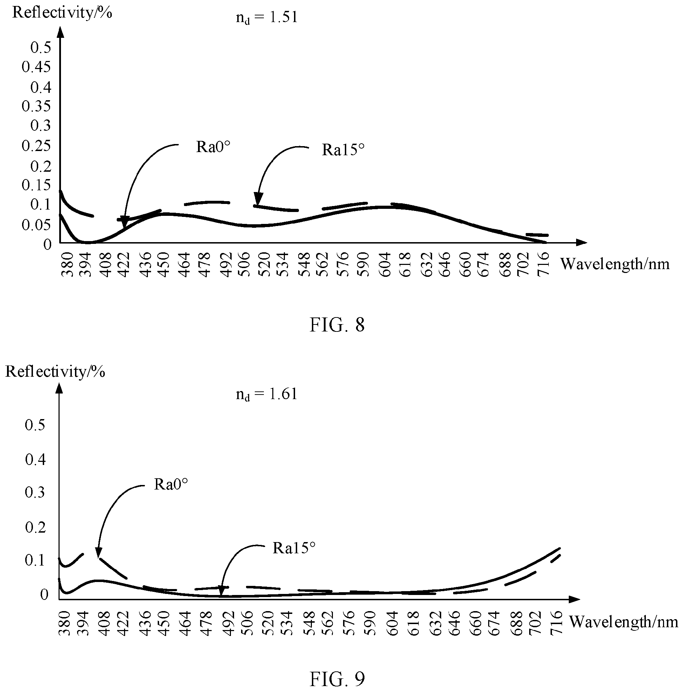

FIG. 8 is a diagram of simulation effect of reflectivity of a camera in which a bonding layer made of a first material is used according to an embodiment of this application. As shown in FIG. 8, the bonding layer made of the first material is used in the simulation. Ra0° indicates reflectivity of the bonding layer with an incident angle of 0°, and Ra15° indicates reflectivity of the bonding layer with an incident angle of 15°. A larger incident angle indicates higher reflectivity. When the incident angle is between 0° and 15°, reflectivity $n_d$ of the incident angle is within 0.5%.

Table 2 is a model of a laminated structure corresponding to a bonding layer that is made of a second material and that is used by the lens according to an embodiment of this application.

**Table 2**

| Model of a laminated structure in which a bonding layer is made of a second material | | | |
|---|---|---|---|
| Material of a first refraction element | Glass (model: H-ZLaF3) | Thickness | 1 mm |
| Material of a first plating layer | For details, see Table 3. | | |
| Material of a bonding layer | Adhesive with a refractive index of 1.61 | Thickness | 0.01 mm |
| Material of a second plating layer | For details, see Table 3. | | |
| Material of a reflection element | Glass (model: H-ZLaF3) | Thickness | 5 mm |

FIG. 9 is a diagram of simulation effect of reflectivity of another camera in which a bonding layer made of a second material is used according to an embodiment of this application. As shown in FIG. 8, the bonding layer made of the first material is used in the simulation. Ra0° indicates reflectivity of the bonding layer with an incident angle of 0°, and Ra15° indicates reflectivity of the bonding layer with an incident angle of 15°. When a wavelength is less than 562 nm, a larger incident angle indicates higher reflectivity. When a wavelength is greater than 604 nm, a larger incident angle indicates lower reflectivity. When the incident angle is between 0° and 15°, reflectivity $n_d$ of the incident angle is within 0.5%.

Compared with Table 1 and Table 2, in the two models of laminated structures in which the bonding layers are made of different layers, the materials and the thickness of the first refraction element and the reflection element are the same, the materials of the first plating layer and the second plating layer are the same, and the thicknesses of the bonding layers are the same. With reference to FIG. 8 and FIG. 9, it indicates that, in embodiments of this application, when bonding layers made of different materials and a first plating layer and a second plating layer made of the same material are used, a requirement that a refractive index is within 0.5% can be met. In other words, this application provides designs of a first plating layer and a second plating layer that meet different adhesives.

It may be understood that, in the foregoing two models of laminated structures, an example in which the first refraction element and the reflection element are glass with a model of H-ZLAF3 is used, and does not constitute a limitation on materials of the first refraction element and the reflection element. The first refraction element and the reflection element may be made of another material.

The following describes structures and materials of the first plating layer and the second plating layer with reference to Table 3.

Table 3 shows the structures and the materials of the first plating layer and the second plating layer according to an embodiment of this application.

It may be understood that the first plating layer and the second plating layer may be made of a plurality of structures and materials. The first plating layer and the second plating layer may be made of a same structure and material. Alternatively, the first plating layer and the second plating layer may be made of different structures and materials. Structures and materials of the first plating layer and the second plating layer shown in Table 3 do not constitute a limitation on the structures and the materials of the first plating layer and the second plating layer.

**Table 3**

| Structures and material designs of a first plating layer and a second plating layer | | | | | | |
|---|---|---|---|---|---|---|
| Layer | Physical thickness | Optical thickness | Full-wave optical thickness | Quarter-wave optical thickness | Refraction status (high refractive index (H)/low refractive index (L)) | Material |
| 1 | 9.305 | 21.56 | 0.039201 | 0.156802 | H | Titanium dioxide |
| 2 | 40.813 | 60.366 | 0.109757 | 0.439027 | L | Silicon dioxide |
| 3 | 25.586 | 59.286 | 0.107794 | 0.431174 | H | Titanium dioxide |
| 4 | 18.247 | 26.989 | 0.049071 | 0.196284 | L | Silicon dioxide |
| 5 | 128.88 | 298.634 | 0.54297 | 2.171881 | H | Titanium dioxide |
| 6 | 13.394 | 19.811 | 0.03602 | 0.14408 | L | Silicon dioxide |
| 7 | 31.523 | 73.043 | 0.132806 | 0.531224 | H | Titanium dioxide |
| 8 | 23.538 | 34.815 | 0.0633 | 0.253199 | L | Silicon dioxide |
| 9 | 13.157 | 30.487 | 0.05543 | 0.221721 | H | Titanium dioxide |

The optical thickness is a product of the physical thickness and the refractive index.

As shown in Table 3, the first plating layer and the second plating layer may be a nine-layer structure formed by titanium dioxide layers and silicon dioxide layers that are sequentially stacked. The titanium dioxide layer is made of a material with a high folding index, and the silicon dioxide layer is made of a material with a low folding index, so that a laminated structure of the material with the high folding index and the material with the low folding index is formed, and therefore, reflected light from a surface of the bonding layer is blocked.

In addition, as shown in Table 3, physical thicknesses and optical thicknesses of structures of layers in the nine-layer structure may be different. The physical thickness and the optical thickness of the structure of each layer may be obtained through simulation.

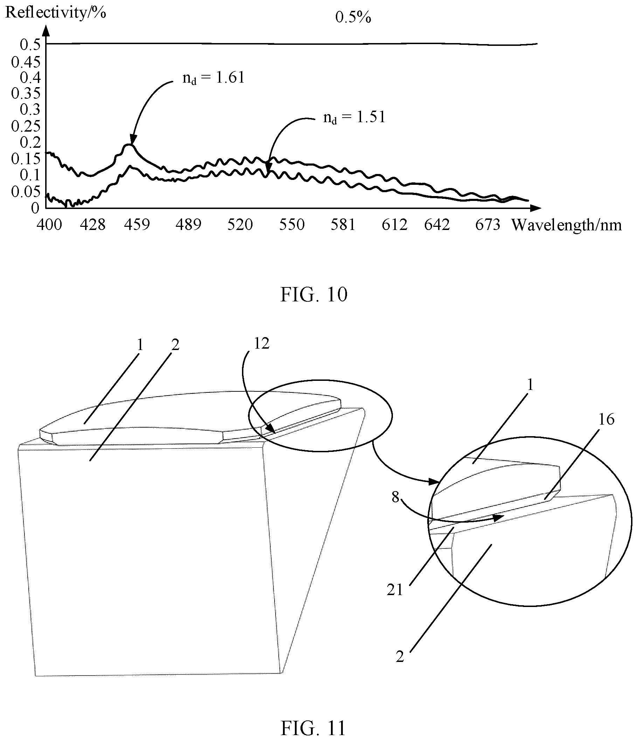

FIG. 10 is a diagram of a measured result of a membrane design according to an embodiment of this application. As shown in FIG. 10, when the first refraction element, the first plating layer, the bonding layer, the second plating layer, and the reflection element shown in Table 1, Table 2, and Table 3 are used, a measured reflectivity is within 0.5%. Corresponding reflectivity of a bonding layer formed by an adhesive with a refractive index of 1.61 is greater than corresponding reflectivity of a bonding layer formed by an adhesive with a refractive index of 1.51.

In the foregoing description, in this embodiment of this application, structures of the first plating layer and the second plating layer are designed, so that a requirement for internal reflectivity $n_d$ of a lens corresponding to bonding layers made of different materials, for example, the internal reflectivity $n_d$ is less than 0.5%.

When the bonding layer is bonded to the first refraction element and the reflection element, the bonding layer may overflow from edges of the first refraction element and the reflection element, and flow to another surface of the first refraction element and the reflection element. This affects passing of a light ray through the first refraction element and the reflection element. In addition, this may affect aesthetics. In embodiments of this application, adhesive storage space is disposed to provide space for the overflowing bonding layer, so that a position of the bonding layer is controlled, and passing of a light ray through the first refraction element and the reflection element is not affected. The following provides a description with reference to the accompanying drawings.

FIG. 11 is a diagram of a structure of still another camera according to an embodiment of this application. As shown in FIG. 11, in some embodiments, a first chamfer 16 is disposed on at least a part of an edge of the light exit surface 12 of the first refraction element 1, and the first chamfer 16 and the light entrance surface 21 of the reflection element 2 form adhesive storage space 8 for accommodating the bonding layer 4.

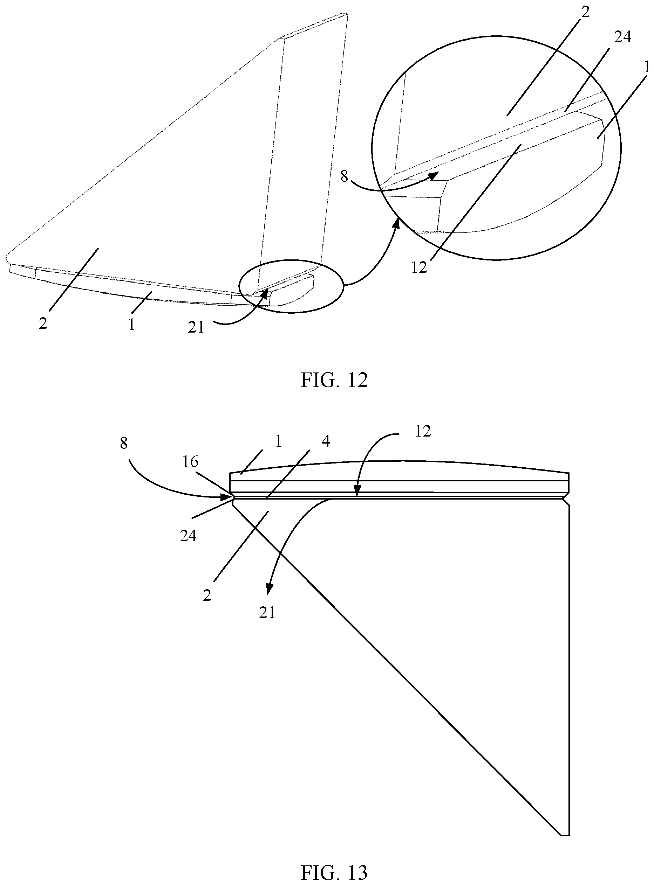

FIG. 12 is a diagram of a structure of yet another camera according to an embodiment of this application. As shown in FIG. 12, in some embodiments, a second chamfer 24 is disposed on at least a part of an edge of the light entrance surface 21 of the reflection element 2, and the second chamfer 24 and the light exit surface 12 of the first refraction element 1 form adhesive storage space 8 for accommodating the bonding layer 4.

FIG. 13 is a diagram of a structure of another camera according to an embodiment of this application. As shown in FIG. 13, in some embodiments, a first chamfer 16 is disposed on at least a part of an edge of the light exit surface 12 of the first refraction element 1, and a second chamfer 24 is disposed on at least a part of an edge of the light entrance surface 21 of the reflection element 2. The first chamfer 16 is disposed in correspondence with the second chamfer 24, to form adhesive storage space 8 for accommodating the bonding layer 4.

In addition, in some embodiments, the bonding layer 4 may be formed through dispensing. An amount and a size of an adhesive for dispensing are optimized, so that a flow position of an adhesive overflowing from the edges of first refraction element and the reflection element can be controlled.

In the foregoing description, the adhesive storage space is disposed, so that a problem that a flow position of the overflowing bonding layer is uncontrollable is resolved, and a step of cleaning the adhesive can be avoided. This reduces a process flow, effectively improves production efficiency, and helps batch production.

After the first refraction element and the reflection element are glued through the bonding layer, there may be stray light on a side surface of a gluing position. To improve stray light effect, in embodiments of this application, a light-shielding layer is added to block the stray light. The following provides a description with reference to the accompanying drawings.

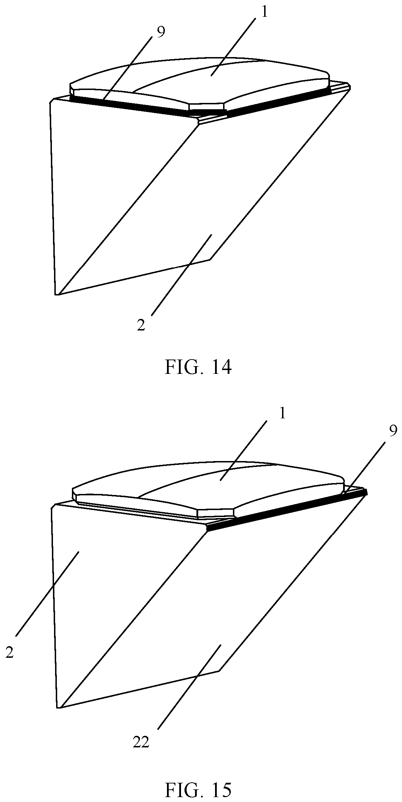

FIG. 14 is a diagram of a structure of another camera according to an embodiment of this application. As shown in FIG. 14, in some embodiments, the camera further includes a light-shielding layer 9. The light-shielding layer 9 is disposed on a bonding edge of the bonding layer and the light exit surface of the first refraction element 1.

As shown in FIG. 14, in some embodiments, a light-shielding layer 9 is disposed on a bonding edge of the bonding layer and the light entrance surface of the reflection element 2.

In an implementation, a light-shielding layer 9 disposed on a bonding edge of the bonding layer and the light exit surface of the first refraction element 1 and a light-shielding layer 9 disposed on a bonding edge of the bonding layer and the light exit surface of the reflection element 2 are of an integrated structure.

FIG. 15 is a diagram of a structure of another camera according to an embodiment of this application. As shown in FIG. 15, a light-shielding layer 9 is disposed on an edge that is of the reflective surface 22 of the reflection element 2 and that is close to the first refraction element 1.

In the foregoing description, in some embodiments, the light-shielding layer 9 may be formed by using an inkjet operation.

In this way, the light-shielding layer is disposed, so that stray light effect of a gluing position after the first refraction element and the reflection element are glued through the bonding layer is improved.

In the descriptions of this specification, the described specific features, structures, materials, or characteristics may be combined in a proper manner in any one or more of embodiments or examples.

Finally, it should be noted that the foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the spirit and scope of the technical solutions of embodiments of this application.

**Claims**

1. A camera, comprising:

   a first refraction element, disposed on a light entrance side of the camera;
   a reflection element, disposed on a light exit side of the first refraction element;
   a bonding layer, wherein a light exit surface of the first refraction element is bonded to a light entrance surface of the reflection element through the bonding layer, at least one boundary of an orthographic projection of the reflection element on a first plane is located within a boundary of an orthographic projection of the first refraction element on the first plane, a refracted light beam emitted from an edge of the light exit surface of the first refraction element is capable of being transmitted to the reflection element, and the first plane is a plane parallel to the light exit surface of the first refraction element; and
   a photosensitive element, disposed on a light exit side of the reflection element and configured to receive a reflected light beam from the reflection element.

2. The camera according to claim 1, wherein at least one group of opposite edges of the light exit surface of the first refraction element is located outside a boundary of the light entrance surface of the reflection element.

3. The camera according to claim 1 or 2, wherein the first refraction element is a plano-convex lens, the reflection element is a dispersive prism, and an included angle between an incident light beam from the first refraction element and the reflected light beam from the reflection element is 90°.

4. The camera according to any one of claims 1 to 3, wherein a first chamfer is disposed on at least a part of the edge of the light exit surface of the first refraction element, and the first chamfer and the reflection element form adhesive storage space for accommodating the bonding layer.

5. The camera according to any one of claims 1 to 4, wherein a second chamfer is disposed on at least a part of an edge of the light entrance surface of the reflection element, and the second chamfer and the first refraction element form adhesive storage space for accommodating the bonding layer.

6. The camera according to any one of claims 1 to 5, wherein the camera further comprises a second refraction element; and

   the second refraction element is disposed between the reflection element and the photosensitive element, and is configured to: receive the reflected light beam from the reflection element, refract the reflected light beam, and then transmit to the photosensitive element.

7. The camera according to any one of claims 1 to 6, wherein the camera further comprises a first plating layer; and the first plating layer is disposed between the bonding layer and the light exit surface of the first refraction element, and is configured to block reflected light from a surface that is of the bonding layer and that is in contact with the first plating layer.

8. The camera according to any one of claims 1 to 7, wherein the camera further comprises a second plating layer; and the second plating layer is disposed between the bonding layer and the light entrance surface of the reflection element, and is configured to block reflected light from a surface that is of the bonding layer and that is in contact with the second plating layer.

9. The camera according to any one of claims 1 to 8, wherein the camera further comprises a light-shielding layer;

   the light-shielding layer is disposed on an edge of bonding between the bonding layer and the light exit surface of the first refraction element;
   and
   the light-shielding layer is disposed on an edge of bonding between the bonding layer and the light entrance surface of the reflection element.

10. The camera according to any one of claims 1 to 9, wherein a bevel is disposed on a corner of the first refraction element in a direction of an optical axis.

11. An electronic device, comprising:

    a housing; and
    a camera module, disposed in the housing, wherein
    the camera module comprises a camera, and the camera comprises:

       a first refraction element, disposed on a light entrance side of the camera;
       a reflection element, disposed on a light exit side of the first refraction element;
       a bonding layer, wherein a light exit surface of the first refraction element is bonded to a light entrance surface of the reflection element through the bonding layer, at least one boundary of an orthographic projection of the reflection element on a first plane is located within a boundary of an orthographic projection of the first refraction element on the first plane, a refracted light beam emitted from an edge of the light exit surface of the first refraction element is capable of being transmitted to the reflection element, and the first plane is a plane parallel to the light exit surface of the first refraction element; and
       a photosensitive element, disposed on a light exit side of the reflection element and configured to receive a reflected light beam from the reflection element, wherein
       a light entrance hole is provided on the housing, and the first refraction element is disposed in correspondence with the light entrance hole, to allow a light beam to be transmitted to the first refraction element through the light entrance hole.

12. The electronic device according to claim 11, wherein at least one group of opposite edges of the light exit surface of the first refraction element is located outside a boundary of the light entrance surface of the reflection element.

13. The electronic device according to claim 11 or 12, wherein the first refraction element is a plano-convex lens, the reflection element is a dispersive prism, and an included angle between an incident light beam from the first refraction element and the reflected light beam from the reflection element is 90°.

14. The electronic device according to any one of claims 11 to 13, wherein a first chamfer is disposed on at least a part of the edge of the light exit surface of the first refraction element, and the first chamfer and the reflection element form adhesive storage space for accommodating the bonding layer.

15. The electronic device according to any one of claims 11 to 14, wherein a second chamfer is disposed on at least a part of an edge of the light entrance surface of the reflection element, and the second chamfer and the first refraction element form adhesive storage space for accommodating the bonding layer.

16. The electronic device according to any one of claims 11 to 15, wherein the camera further comprises a second refraction element; and
the second refraction element is disposed between the reflection element and the photosensitive element, and is configured to: receive the reflected light beam from the reflection element, refract the reflected light beam, and then transmit the refracted light beam to the photosensitive element.

17. The electronic device according to any one of claims 11 to 16, wherein the camera further comprises a first plating layer; and
the first plating layer is disposed between the bonding layer and the light exit surface of the first refraction element, and is configured to block reflected light from a surface that is of the bonding layer and that is in contact with the first plating layer.

18. The electronic device according to any one of claims 11 to 17, wherein the camera further comprises a second plating layer; and
the second plating layer is disposed between the bonding layer and the light entrance surface of the reflection element, and is configured to block reflected light from a surface that is of the bonding layer and that is in contact with the second plating layer.

19. The electronic device according to any one of claims 11 to 18, wherein the camera further comprises a light-shielding layer;

the light-shielding layer is disposed on an edge of bonding between the bonding layer and the light exit surface of the first refraction element; and
the light-shielding layer is disposed on an edge of bonding between the bonding layer and the light entrance surface of the reflection element.

20. The electronic device according to any one of claims 11 to 19, wherein a bevel is disposed on a corner of the first refraction element in a direction of an optical axis.

**100**

151/121a

A

150

121
122 } 120
123

130/131

1

2

3

3

140

122

123

z
y x

110

FIG. 1

**131**

FIG. 2

FIG. 3

FIG. 4a

FIG. 4b

FIG. 5

FIG. 6

FIG. 7

Reflectivity/%

$n_d = 1.51$

FIG. 8

Reflectivity/%

$n_d = 1.61$

FIG. 9

Reflectivity/%                                    0.5%

$n_d = 1.61$

$n_d = 1.51$

0.5
0.45
0.4
0.35
0.3
0.25
0.2
0.15
0.1
0.05
0

400   428   459   489   520   550   581   612   642   673   Wavelength/nm

FIG. 10

1   2        12

1

16

8

21

2

FIG. 11

FIG. 12

FIG. 13

FIG. 14

FIG. 15

<div align="center">

**INTERNATIONAL SEARCH REPORT**

</div>

| International application No. |
|---|
| **PCT/CN2023/111306** |

| A. | CLASSIFICATION OF SUBJECT MATTER |
|---|---|

H04N23/57(2023.01)i

According to International Patent Classification (IPC) or to both national classification and IPC

| B. | FIELDS SEARCHED |
|---|---|

Minimum documentation searched (classification system followed by classification symbols)

IPC:H04N G02B G03B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 华为, 潜望, 棱镜, 反射, 折射, 透镜, 镜片, 凸, 正屈光, 正光焦, 进光量, 光通量, 汇聚, 汇集, 粘, 黏, 胶, 投影, 直径, 口径, periscope, prism?, light+, reflect+, refract+, lens, convex, positive, collect+, glue?, projection, diameter?

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2017131529 A1 (HIMAX TECHNOLOGIES LTD.) 11 May 2017 (2017-05-11) description, paragraphs 18-33, and figures 2-9 | 1-20 |
| Y | KR 20160000759 A (SAMSUNG ELECTRONICS CO., LTD.) 05 January 2016 (2016-01-05) claims 15-16, description, paragraphs 32-181, and figures 1, 3, and 5 | 1-20 |
| A | CN 113992813 A (NINGBO SUNNY OPTICAL TECHNOLOGY CO., LTD.) 28 January 2022 (2022-01-28) entire document | 1-20 |
| A | CN 109690380 A (COREPHOTONICS LTD.) 26 April 2019 (2019-04-26) entire document | 1-20 |
| A | CN 110873953 A (APPLE INC.) 10 March 2020 (2020-03-10) entire document | 1-20 |
| A | WO 2022007603 A1 (NINGBO SUNNY OPTICAL TECHNOLOGY CO., LTD.) 13 January 2022 (2022-01-13) entire document | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2023** | **21 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111306**

| Patent document cited in search report | | | Publication date (day/month/year) | Patent family member(s) | | | Publication date (day/month/year) |
|---|---|---|---|---|---|---|---|
| US | 2017131529 | A1 | 11 May 2017 | US | 10067320 | B2 | 04 September 2018 |
| KR | 20160000759 | A | 05 January 2016 | None | | | |
| CN | 113992813 | A | 28 January 2022 | None | | | |
| CN | 109690380 | A | 26 April 2019 | None | | | |
| CN | 110873953 | A | 10 March 2020 | None | | | |
| WO | 2022007603 | A1 | 13 January 2022 | None | | | |

Form PCT/ISA/210 (patent family annex) (July 2022)

**EP 4 525 472 A1**

**Patent documents cited in the description**

- CN 202211013150